# EUROPÄISCHE PATENTANMELDUNG

(11) **EP 1 959 133 A2**
(43) Veröffentlichungstag der Anmeldung: **20.08.2008**
(21) Anmeldenummer: 07025070.9
(22) Anmeldetag: 22.12.2007
(51) Int. Cl.: F03D 7/02, F03D 9/00, F03D 11/00

(54) **Einspeiseumrichteranlage**

(30) Priorität: 19.01.2007 DE 102007002986; 22.08.2007 DE 102007039726
(71) Anmelder: Sieb & Meyer Aktiengesellschaft, 21339 Lüneburg (DE); Inensus GmbH, 38640 Goslar (DE)
(72) Erfinder: Peterschmidt, Nico, 49134 Wallenhorst (DE); Schmidt-Reindahl, Jakob, 27336 Frankenfeld (DE); Leifert, Torsten, Dr., 21360 Vögelsen (DE); Bystry, Katrin, 21401 Thomasburg (DE); Buchhorn, Rainer, 21360 Vögelsen (DE); Peters, Holger, 26419 Schortens (DE)
(74) Vertreter: Kloiber, Thomas

(57) **Zusammenfassung**

Eine Einspeiseumrichteranlage für kleine Windenergieanlagen wird hinsichtlich eines kompakten Aufbaus und wirtschaftlicher Installations- und Betriebskosten dadurch verbessert, dass eine Gleichrichtereinrichtung (2) und eine Wechselrichtereinrichtung (3) in einem Gehäuse (1) angeordnet sind und dass eine gemeinsame Steuervorrichtung (5) zur Regelung der Anlagenkomponenten bei unterschiedlichen Lastfällen, insbesondere beim Anlaufen der Windenergieanlage oder deren Betrieb am optimalen Betriebspunkt, vorgesehen ist.

## Beschreibung

Die Erfindung betrifft eine Einspeiseumrichteranlage für kleine Windenergieanlagen.

Aus dem Photovoltaik-Bereich sind Wechselrichtergeräte bekannt, mit denen die aus Fotozellen gewonnene Gleichspannung in Wechselspannung geeigneter Voltzahl zum Betrieb von beispielsweise Haushaltsgeräten oder zur Einspeisung in das Stromnetz umwandelbar ist. Solche Geräte aus dem Photovoltaik-Bereich werden üblicherweise auch im Zusammenhang mit kleinen Windenergieanlagen verwendet, da speziell für kleine Windenergieanlagen entwickelte Geräte oft nicht wirtschaftlich sind. Da die Windenergieanlagen aber im Allgemeinen mit Wechselstromgeneratoren ausgestattet sind, muss zwischen Generator und Wechselrichter im Gegensatz zu Photovoltaik-Anlagen noch zusätzlich ein Gleichrichter angeordnet sein, um den vom Generator erzeugten Wechselstrom mit variabler Frequenz in einen zur Einspeisung in das Stromnetz geeigneten Wechselstrom mit konstanter Frequenz von 50 Hz oder 60 Hz umzuwandeln. Eine solche Gerätekombination ist allerdings aufwendig bei der Installation und wegen des Erfordernisses verschiedener Geräte unhandlich. Hinzu kommt, dass die kleinen Windenergieanlagen zum Anlaufen oder als Überspannungsschutz zusätzliche Lastwiderstände benötigen, so dass mindestens ein weiteres Gerät hinzukommt, welches die genannten Nachteile noch vergrößert.

Aufgabe der Erfindung ist es, eine Einspeiseumrichteranlage für kleine Windenergieanlagen anzugeben, die wirtschaftlich hergestellt und installiert werden kann und einen möglichst wirtschaftlichen Betrieb der Windenergieanlage ermöglicht.

Die Erfindung löst die Aufgabe dadurch, dass eine Gleichrichtereinrichtung und eine Wechselrichtereinrichtung in einem Gehäuse angeordnet sind und dass eine gemeinsame Steuervorrichtung zur Regelung der Anlagenkomponenten bei unterschiedlichen Lastfällen, insbesondere beim Anlaufen der Windenergieanlage oder deren Betrieb am optimalen Betriebspunkt, vorgesehen ist. Durch die Unterbringung von Gleichrichter und Wechselrichter in einem einzigen Gehäuse erhält man ein einziges Gerät, welches auf besonders einfache Weise installiert werden kann und die erforderlichen Funktionen zur Einspeisung des in der Windenergieanlage gewonnenen Stromes in das Stromnetz bereitstellt. Die gemeinsame Steuervorrichtung stellt sicher, dass sich die Einspeiseumrichteranlage an alle wesentlichen Betriebszustände der Windenergieanlage anpasst und insbesondere ein optimiertes Anlaufen der Windenergieanlage und die Einstellung eines optimalen Betriebspunktes im Normalbetrieb gewährleistet.

In Ausgestaltung der Erfindung ist vorgesehen, dass die Steuervorrichtung die Anlagenkomponenten in Abhängigkeit von den Messgrößen Spannung und/oder Strom sowie deren Frequenz und/oder der Drehzahl eines Synchrongenerators der Windenergieanlage regelnd ausgestaltet ist. Die Berücksichtigung der genannten Parameter erlaubt eine bestmögliche Anpassung an alle Betriebszustände.

Wenn ein zum Anlaufen der Windenergieanlage und/oder zum Überspannungsschutz dienender Lastwiderstand in das Gehäuse der Einspeiseumrichteranlage integriert ist, wird die Kompaktheit und einfache Handhabbarkeit der Anlage noch verbessert. Wahlweise erfolgt eine Aufteilung des Lastwiderstandes in einen internen Lastwiderstand kleiner Leistung zum Überspannungsschutz und einen externen Lastwiderstand größerer Leistung. Optimal kann der externe Lastwiderstand luft- oder wassergekühlt werden.

In Ausgestaltung der Erfindung ist in das Gehäuse der Einspeiseumrichteranlage ein Lüfter integriert, der die Luft innerhalb des Gehäuses nur umwälzt, wobei die Gerätekühlung mittels externer natürlicher Luftkonvektion erfolgt. Diese Maßnahme ermöglicht ein geschlossenes Gehäuse ohne Lüftungsöffnungen, wodurch sich eine bessere Schutzart der Einspeiseumrichteranlage nach IP65 ergibt.

In Ausgestaltung der Erfindung ist die Steuervorrichtung über eine Schnittstelle mit Verbrauchern verbunden und umfasst ein Verbrauchsmanagement, welches den Energiefluss von der Windenergieanlage zu den Verbrauchern und/oder ins Stromnetz oder vom Stromnetz zu den Verbrauchern in Abhängigkeit vom Betriebszustand der Windenergieanlage regelt. Das Verbrauchsmanagement ist vorzugsweise in Form eines Computerprogramms in die Steuervorrichtung integriert. Bei geringem oder fehlendem Wind ermöglicht es den Bezug von Strom aus dem Stromnetz zur Speisung der Verbraucher. Sobald die Windenergieanlage genügend Strom liefert, werden dann die Verbraucher zum Betrieb am Hausstromnetz freigeschaltet. Steht weniger Strom zur Verfügung als die Verbraucher benötigen, so wird der zusätzlich benötigte Strom aus dem öffentlichen Stromnetz bezogen. Steht mehr Strom aus Windenergie zur Verfügung als die Verbraucher benötigen, so wird der überschüssige Strom ins Stromnetz eingespeist.

In Weiterbildung der zuletzt beschriebenen Maßnahme ist vorgesehen, dass die Schnittstelle zwischen Steuervorrichtung und Verbrauchern eine Funkübertragung der Steuer- und Regelungssignale umfasst. Bei dieser Ausgestaltung kann auf die Verlegung von Signalleitungen verzichtet werden. Die Elektronik für die Funkübertragung wird selbstverständlich auch in demselben Gehäuse wie die übrigen Komponenten der Einspeiseumrichteranlage integriert. Vorzugsweise kommt der Funkstandard Zigbee 805.3 zur Anwendung.

In Ausgestaltung der Erfindung ist eine Messstelle im Übergangsbereich zwischen einem Hausnetz und dem Stromnetz eines Energieversorgungsunternehmens vorgesehen, die über einen Datenkanal mit der Steuervorrichtung verbunden ist und hierüber Daten des Leistungsflusses am Übergabepunkt übermittelt. Mit den Daten dieser Messstelle können die zuschaltbaren und regelbaren elektrischen Verbraucher im Haus so geregelt werden, dass die maximale elektrische Leistung im Haus selbst verbraucht und nicht in das Stromnetz eingespeist wird.

In einer besonders kostengünstigen und vorteilhaften Ausgestaltung ist vorgesehen, dass der Lastwiderstand als zusätzlicher Verbraucher zur Vermeidung der Einspeisung überschüssiger Energie ins Stromnetz zuschaltbar ist und dass die am Lastwiderstand entstehende Wärme für die Warmwasserbereitung oder zum Heizen nutzbar ist. Auf diese Weise wird der ansonsten zum Anlaufen der Windenergieanlage oder als Überspannungsschutz dienende Lastwiderstand, der ohnehin vorhanden ist, zusätzlich genutzt, ohne dass es der Installation eines besonderen Verbrauchers bedürfte. Diese Nutzung ist natürlich nur dann sinnvoll, wenn die überschüssige Energie im Haus nutzbringend verwendet werden kann, anstatt in das Stromnetz eingespeist zu werden. Als Nutzeffekt ergibt sich hier die Bereitung von Warmwasser bzw. die Heizung des Hauses mittels der am Lastwiderstand entstehenden Wärme.

In einer Weiterbildung der Erfindung ist vorgesehen, dass eine Wärmepumpe als zusätzlicher Verbraucher zur Vermeidung der Einspeisung überschüssiger Energie ins Stromnetz zuschaltbar ist und dass die Wärmepumpe zum Heizen oder Kühlen nutzbar ist. Im Gegensatz zur Verwendung des Lastwiderstandes als zusätzlicher Verbraucher ist die Wärmepumpe konstruktiv aufwendiger, bringt aber einen höheren Nutzen als der Lastwiderstand, weil einerseits mehr Wärme zum Heizen zur Verfügung steht und andererseits auch das Kühlen möglich ist.

Die genannte Ausgestaltung kann noch verbessert werden, wenn die Wärmepumpe über einen Wechselrichter direkt an den Gleichstromzwischenkreis des Einspeiseumrichters angeordnet ist und mittels der Steuervorrichtung regelbar ist. Damit können die ansonsten bei der weiteren Umformung der elektrischen Energie entstehenden Verluste eingespart werden.

Als weitere Verbesserung der Erfindung wird vorgeschlagen, dass die Steuervorrichtung so programmiert ist, dass sie bei schnellen Zunahmen der Drehzahl oder der Leistung des Synchrongenerators kurzfristig eine Abweichung vom optimalen Betriebspunkt zulässt, um dann langsam zum optimalen Betriebspunkt zurückzukehren. Wenn die Drehzahl oder die Leistung des Synchrongenerators relativ schnell zunimmt, so ist dies in der Regel auf Windböen zurückzuführen. Da Windböen allerdings nur kurz anhalten, ist es unter Umständen nicht ratsam, zusätzliche Verbraucher zuzuschalten, um den zusätzlichen Energiefluss aufzunehmen. Wenn nun die Steuervorrichtung kurzfristig eine höhere Drehzahl als am optimalen Betriebspunkt zulässt, so wird die in den Windböen enthaltene zusätzliche Energie als Rotationsenergie des Rotors der Windenergieanlage zwischengespeichert. Danach wird diese zusätzliche Rotationsenergie langsam verbraucht, indem die Steuervorrichtung die Drehzahl langsam heruntergeregelt, bis der optimale Betriebspunkt wieder erreicht ist. Diese erfinderische Maßnahme ermöglicht eine kontinuierliche gleichmäßige Nutzung der elektrischen Energie für Verbraucher, die aus irgendeinem Grund als höherwertig einzustufen sind, deren Leistungsaufnahme aber nach oben hin begrenzt ist. Die erfindungsgemäße Maßnahme ermöglicht also erst die "höherwertigen Verbraucher" den übrigen Verbrauchern vorzuziehen.

Ein Ausführungsbeispiel der Erfindung wird anhand der Zeichnung näher erläutert.

Die einzige Figur zeigt im Einzelnen:

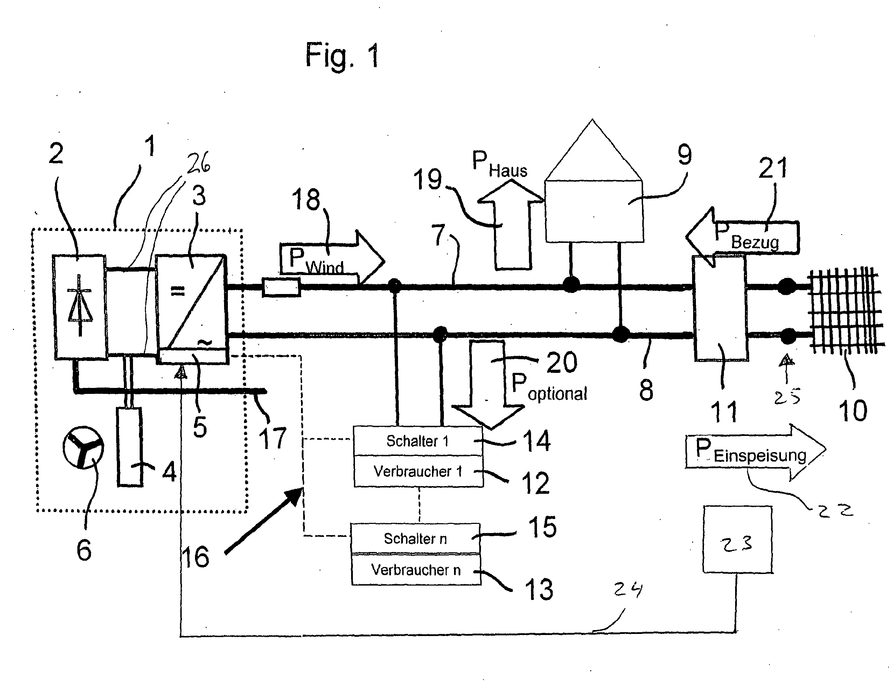

- Figur 1:: ein Blockschaltbild mit erfindungsgemäßer Einspeiseumrichteranlage.

Ein Gehäuse 1 einer erfindungsgemäßen Einspeiseumrichteranlage ist in der Figur durch eine punktierte Linie dargestellt. Im Gehäuse 1 ist ein Gleichrichter 2 und ein Wechselrichter 3 integriert, die über einen Gleichstromzwischenkreis 26 miteinander verbunden sind. Außerdem ist ein Lastwiderstand 4 im Gehäuse 1 angeordnet und elektrisch mit den anderen Anlagenkomponenten verbunden. Zur Steuerung dient eine Steuervorrichtung 5, die ebenfalls im Gehäuse angeordnet ist. Schließlich umfasst das Gehäuse 1 noch einen Lüfter 6, mit dem die Luft im Innenraum des Gehäuses 1 umgewälzt wird. Hierdurch wird gewährleistet, dass die Wärme von den elektrischen Anlagekomponenten 2, 3, 4, 5 abgeführt und zur Innenwand des Gehäuses 1 transportiert wird. Das Gehäuse 1 wird von außen von der Umgebungsluft umströmt und dadurch gekühlt.

Über elektrische Leitungen 7, 8 ist der Wechselrichter 3 der Einspeiseumrichteranlage einerseits mit den elektrischen Verbrauchern 9 eines Wohnhauses und andererseits mit dem Stromnetz 10 verbunden. Unmittelbar im Bereich der Verbindung zum Stromnetz 10 ist ein Stromzähler 11 angeordnet. Desweiteren sind an die Stromleitungen 7, 8 zusätzliche Verbraucher 12, 13 optional zuschaltbar. Hierfür hat jeder Verbraucher 12, 13 einen ihm zugeordneten Schalter 14, 15. Die Schalter 14, 15 sind über eine durch die Strichelung 16 angedeutete Funkschnittstelle mit einem Verbrauchsmanagement der Steuervorrichtung 5 verbunden.

Während des normalen Betriebes der Windenergieanlage fließt der von einem Synchrongenerator der Windenergieanlage erzeugte Wechselstrom, der je nach Drehgeschwindigkeit des Rotors der Windenergieanlage eine variable Frequenz aufweist, über die Zuleitung 17 zum Gleichrichter 2. Dort wird der erzeugte Wechselstrom variabler Frequenz gleichgerichtet. Der Lastwiderstand 4 dient zum Schutz gegen Überspannungen und wird auch beim Anfahren der Windenergieanlage aus dem Stand benötigt. Der so erhaltene Gleichstrom wird im Wechselrichter 3 zu einem Wechselstrom konstanter Frequenz von 50 Hz umgewandelt und auf eine Spannung von 230 V geregelt. Die aus der Windenergieanlage kommende und in der Einspeiseumrichteranlage umgerichtete elektrische Leistung 18 (P_{Wind}) gelangt über die elektrischen Leitungen 7, 8 zu den elektrischen Verbrauchern 9 des Wohnhauses.

Steht eine zu parametrierende minimale elektrische Leistung 18 aus Windenergie zur Verfügung, so werden die optionalen Verbraucher 20 zum Betrieb freigeschaltet. Je nach Programmierung des Verbrauchsmanagements in der Steuervorrichtung 5 schaltet diese mittels der Schalter 14, 15 eine beliebige Anzahl zusätzlicher Verbraucher 12, 13 zu. Sollte von den optionalen Verbrauchern 12, 13 sowie den nicht schaltbaren Hausverbrauchern 9 die Windenergie nicht vollständig verwendet werden, so wird die überschüssige Leistung in das Stromnetz 10 eingespeist.

Für den Fall, dass die Windenergieanlage weniger als die geforderte elektrische Leistung 18 zur Verfügung stellen kann, schaltet das Verbrauchsmanagement die optionalen Verbraucher ab. Dabei berücksichtigt die Steuervorrichtung 5 Betriebsgrößen wie Drehzahl, Frequenz, Spannung sowie Strom des Generators der Windanlage.

Desweiteren ist eine Messstelle 23 im Bereich eines Übergabepunktes 25 zwischen dem lokalen Hausnetz und dem Stromnetz 10 des Energieversorgungsunternehmens angeordnet. Die Messstelle 23 ist über einen Datenkanal 24 mit der Steuervorrichtung 5 verbunden. Der Datenkanal 24 kann als Kabel, aber auch kabellos, insbesondere als Funkverbindung ausgestaltet sein. Durch die Messstelle 23 erhält die Steuervorrichtung 5 stets aktuelle Informationen über die aus dem Stromnetz 10 bezogene Leistung P_{Bezug} und die ins Stromnetz 10 eingespeiste Leistung P_{Einspeisung}, sodass diese Leistungsflüsse durch programmgesteuerte Reaktionen der Steuervorrichtung 5 regelbar sind.

### BEZUGSZEICHENLISTE

- 1: Gehäuse
- 2: Gleichrichter
- 3: Wechselrichter
- 4: Lastwiderstand
- 5: Steuervorrichtung
- 6: Lüfter
- 7: elektrische Leitung
- 8: elektrische Leitung
- 9: elektrischer Verbraucher
- 10: Stromnetz
- 11: Stromzähler
- 12: Verbraucher
- 13: Verbraucher
- 14: Schalter
- 15: Schalter
- 16: Strichelung/Funkschnittstelle
- 17: Zuleitung vom Generator der Windenergieanlage
- 18: elektrische Leistung aus Windenergieanlage P_{Wind}
- 19: elektrische Leistung für Wohnhaus P_{Haus}
- 20: elektrische Leistung für optionale Verbraucher Pₒₚₜᵢₒₙₐₗ
- 21: elektrische Leistung aus dem Stromnetz P_{Bezug}
- 22: elektrische Leistung in das Stromnetz P_{Einspeisung}
- 23: Messstelle
- 24: Datenkanal
- 25: Übergabepunkt
- 26: Gleichstromzwischenkreis

## Patentansprüche

1. Einspeiseumrichteranlage für kleine Windenergieanlagen, **dadurch gekennzeichnet, dass** eine Gleichrichtereinrichtung (2) und eine Wechselrichtereinrichtung (3) in einem Gehäuse (1) angeordnet sind und dass eine gemeinsame Steuervorrichtung (5) zur Regelung der Anlagenkomponenten bei unterschiedlichen Lastfällen, insbesondere beim Anlaufen der Windenergieanlage oder deren Betrieb am optimalen Betriebspunkt, vorgesehen ist.

2. Anlage nach Anspruch 1, **dadurch gekennzeichnet, dass** die Steuervorrichtung (5) die Anlagenkomponenten in Abhängigkeit von den Messgrößen Spannung und/oder Strom sowie deren Frequenz und/oder der Drehzahl eines Synchrongenerators der Windenergieanlage regelnd ausgestaltet ist.

3. Anlage nach Anspruch 1 oder 2, **dadurch gekennzeichnet, dass** ein zum Anlaufen der Windenergieanlage und/oder zum Überspannungsschutz dienender Lastwiderstand (4) in das Gehäuse (1) der Einspeiseumrichteranlage integriert ist.

4. Anlage nach Anspruch 1 oder 2, **dadurch gekennzeichnet, dass** ein interner Lastwiderstand kleiner Leistung zum Überspannungsschutz in das Gehäuse (1) der Einspeiseumrichteranlage integriert ist.

5. Anlage nach Anspruch 4, **dadurch gekennzeichnet, dass** ein externer Lastwiderstand großer Leistung luft- oder wassergekühlt und außerhalb des Gehäuses (1) angeordnet ist.

6. Anlage nach einem der vorhergehenden Ansprüche, **dadurch gekennzeichnet, dass** in das Gehäuse (1) der Einspeiseumrichteranlage ein Lüfter (6) integriert ist, der die Luft innerhalb des Gehäuses (1) nur umwälzt und dass die Gerätekühlung mittels externer natürlicher Luftkonvektion erfolgt.

7. Anlage nach einem der vorhergehenden Ansprüche, **dadurch gekennzeichnet, dass** die Steuervorrichtung (5) über eine Schnittstelle (16) mit Verbrauchern verbunden ist und die Steuervorrichtung (5) ein Verbrauchsmanagement umfasst, welches den Energiefluss von der Windenergieanlage zu den Verbrauchern und/oder ins Stromnetz (10) oder vom Stromnetz (10) zu den Verbrauchern (9, 12, 13) in Abhängigkeit vom Betriebszustand der Windenergieanlage regelt.

8. Anlage nach Anspruch 7, **dadurch gekennzeichnet, dass** die Schnittstelle zwischen Steuervorrichtung (5) und Verbrauchern (9, 12, 13) eine Funkübertragung der Steuer- und Regelungssignale umfasst.

9. Anlage nach Anspruch 7 oder 8, **dadurch gekennzeichnet, dass** eine Messstelle (23) im Übergangsbereich zwischen einem Hausnetz (2, 3, 4, 5, 7, 8, 9, 12, 13) und dem Stromnetz (10) eines Energieversorgungsunternehmens vorgesehen ist, die über einen Datenkanal (24) mit der Steuerungsvorrichtung (5) verbunden ist und hierüber Daten des Leistungsflusses am Übergabepunkt (25) übermittelt.

10. Anlage nach einem der Ansprüche 7 bis 9, **dadurch gekennzeichnet, dass** der Lastwiderstand (4) als zusätzlicher Verbraucher (12, 13) zur Vermeidung der Einspeisung überschüssiger Energie ins Stromnetz (10) zuschaltbar ist und dass die am Lastwiderstand (4) entstehende Wärme für die Warmwasserbereitung oder zum Heizen nutzbar ist.

11. Anlage nach einem der Ansprüche 7 bis 10, **dadurch gekennzeichnet, dass** eine Wärmepumpe als zusätzlicher Verbraucher (12, 13) zur Vermeidung der Einspeisung überschüssiger Energie ins Stromnetz (10) zuschaltbar ist und dass die Wärmepumpe zum Heizen oder Kühlen nutzbar ist.

12. Anlage nach Anspruch 11, **dadurch gekennzeichnet, dass** die Wärmepumpe über einen Wechselrichter direkt an den Gleichstromzwischenkreis (26) des Einspeiseumrichters (1 bis 5) angeschlossen ist und mittels der Steuervorrichtung (5) regelbar ist.

13. Anlage nach einem der vorhergehenden Ansprüche, **dadurch gekennzeichnet, dass** die Steuervorrichtung (5) so programmiert ist, dass sie bei schnellen Zunahmen der Drehzahl oder der Leistung des Synchrongenerators kurzfristig eine Abweichung vom optimalen Betriebspunkt zulässt, um dann langsam zum optimalen Betriebspunkt zurückzukehren.
